# EUROPÄISCHE PATENTSCHRIFT

(11) **EP 3 659 719 B1**
(45) Veröffentlichungstag und Bekanntmachung des Hinweises auf die Patenterteilung: **18.01.2023**
(21) Anmeldenummer: 18209395.5
(22) Anmeldetag: 30.11.2018
(51) Int. Cl.: B07C 5/36, B65G 47/96

(54) **SORTIERVORRICHTUNG FÜR STÜCKGUT MIT MEHREREN ZIELSTELLEN**
SORTING DEVICE FOR ARTICLES WITH MULTIPLE DESTINATIONS
DISPOSITIF DE TRI POUR MARCHANDISES DE DÉTAIL À UNE PLURALITÉ DE POSTES CIBLES

(43) Veröffentlichungstag der Anmeldung: 03.06.2020
(73) Patentinhaber: Körber Supply Chain Logistics GmbH, 78467 Konstanz (DE)
(72) Erfinder: VITALINI, Michele, 90475 Nürnberg (DE)
(74) Vertreter: Müller Schupfner & Partner Patent- und Rechtsanwaltspartnerschaft mbB

(56) Entgegenhaltungen:
- DE-A1-102014 206 740
- US-A- 4 984 676
- US-B1- 8 919 529

## Beschreibung

Die Erfindung betrifft eine Sortiervorrichtung für Stückgut mit mehreren Zielstellen.

Zum Sortieren von Stückgut werden in der Logistik üblicherweise Sorter eingesetzt, welche das jeweilige Stückgut in verschiedene Endstellen ausschleusen.

Es sind Sortiervorrichtungen bekannt, welche jeweils als Mehrfach-Endstellen verwendet werden. Solche Sortiervorrichtungen weisen mehrere Zielstellen auf.

Beispielsweise kann die Sortiervorrichtung zwei Zielstellen und eine Klappe aufweisen. Die Klappe ist zwischen zwei Positionen jeweils zum Einsortieren von Stückgut in eine der Zielstellen beweglich. In der Regel verschließt die Klappe einen Stückgutweg zur ersten Zielstelle, wenn sie den Stückgutweg zur zweiten Zielstelle freigibt - und umgekehrt.

Der Vorteil solcher als Mehrfach-Endstellen genutzter Sortiervorrichtungen mit jeweils zwei Zielstellen ist ein geringerer Platzbedarf gegenüber der Verwendung von einfachen Endstellen mit jeweils nur einer Zielstelle.

Jedoch bringt die Verwendung der Klappen auch Nachteile mit sich. Die Klappen sind störanfällig. Außerdem benötigt die Positionierung der Klappe eine gewisse Zeit, während welcher keine Sortierung mittels der jeweiligen Sortiervorrichtung erfolgen kann. In der Praxis werden deshalb keine Sortiervorrichtungen mit drei (oder mehr) Zielstellen verwendet.

Eine Sortiervorrichtung nach dem Oberbegriff von Anspruch 1 ist beispielsweise aus US-A-4,984,676 bekannt.

Eine Aufgabe der Erfindung ist es, eine verbesserte Sortiervorrichtung für Stückgut mit mehreren Zielstellen anzugeben.

Die Aufgabe wird gelöst durch eine Sortiervorrichtung für Stückgut mit mehreren Zielstellen gemäss dem unabhängigen Anspruch 1.

Mittels der Kanalelemente kann auf diese Weise ein jeweiliger Stückgutweg zum Einsortieren von Stückgut vorgegeben werden. Zweckmäßigerweise ist der Stückgutweg von den Positionen der Kanalelemente abhängig. Der Stückgutweg führt sinnvollerweise jeweils zu einer der mehreren Zielstellen.

Der Klappmechanismus ermöglicht vorzugsweise ein schnelles Umschalten zwischen den Positionen der Kanalelemente. Zweckmäßigerweise ist der Klappmechanismus robust. Auf diese Weise kann die Positionierung der Kanalelemente robust bzw. nicht störanfällig sein.

Mittels der Sortiervorrichtung ist eine Sortierung von Stückgut in zwei oder mehr Zielstellen möglich. Insbesondere kann eine Sortierung von Stückgut in drei Zielstellen ermöglicht werden.

Eine Zielstelle kann beispielsweise eine Sammelstelle sein. Weiter kann eine Zielstelle eine Förderstrecke o. Ä. sein.

Die Sortiervorrichtung kann als Mehrfach-Endstelle für einen Sorter verwendet werden.

Vorteilhafterweise bewirkt der Kippmechanismus im aktivierten Zustand eine gleichzeitige Kippbewegung der beiden Kanalelemente. Insbesondere kann der Kippmechanismus im aktivierten Zustand eine synchrone Kippbewegung der beiden Kanalelemente bewirken. Mit anderen Worten: Es ist vorteilhaft, wenn der Kippmechanismus im aktivierten Zustand eine gleichzeitige, insbesondere synchrone, Kippbewegung der beiden Kanalelemente bewirkt.

Vorzugsweise ist der Kippmechanismus derart ausgebildet, dass die Kippbewegungen der beiden Kanalelemente miteinander gekoppelt sind.

Beispielsweise kann die Kippbewegung der beiden Kanalelemente derart miteinander gekoppelt sein, dass die Kippbewegung des ersten Kanalelements in die entgegengesetzte Drehrichtung verläuft als die Kippbewegung des zweiten Kanalelements. Auf diese Weise können beim Verkippen der Kanalelemente die zumindest im Wesentlichen zueinander gerichteten Enden der Kanalelemente eine gleichläufige Bewegung ausführen.

In einer bevorzugten Ausgestaltung der Erfindung sind die Kippbewegungen der beiden Kanalelemente derart miteinander gekoppelt, dass die Kippbewegung des ersten Kanalelements in die gleiche Drehrichtung verläuft wie die Kippbewegung des zweiten Kanalelements. Wenn beispielsweise das erste Kanalelement eine Kippbewegung in eine Drehrichtung (z. B. im Uhrzeigersinn) ausführt, dann führt vorzugsweise das zweite Kanalelement auch eine Kippbewegung in dieser Drehrichtung (z. B. im Uhrzeigersinn) aus.

Auf diese Weise können beim Verkippen der Kanalelemente zumindest im Wesentlichen zueinander gerichtete Enden der Kanalelemente gegenläufige Bewegungen ausführen.

Zweckmäßigerweise umfasst der Kippmechanismus zumindest einen Motor. Der Motor kann direkt mit einem der Kanalelemente gekoppelt sein ("Direktmotor") und/oder indirekt, z. B. über zumindest einen Riemen, eine Stange usw. Der Motor kann die Kippbewegung zumindest eines der Kanalelemente bewirken. Auf diese Weise kann der Motor die Positionierung der Kanalelemente bewirken.

Die beiden Kanalelemente können, insbesondere zur Kopplung ihrer Kippbewegungen, miteinander verbunden sein. Beispielsweise können die Kanalelemente über zumindest eine Stange, einen Riemen usw. verbunden sein.

Ferner kann der Kippmechanismus zwei Synchronmotoren aufweisen, wobei jeder der Synchronmotoren mit einem der Kanalelemente gekoppelt ist.

Abhängig von den Positionen der Kanalelemente wird zweckmäßigerweise mittels der Kanalelemente ein jeweiliger Stückgutweg zum Einsortieren von Stückgut in eine der Zielstellen vorgegeben.

Es ist bevorzugt, wenn jeder der Stückgutwege durch das erste Kanalelement hindurch führt. Das heißt insbesondere, dass unabhängig von der Position der Kanalelemente vorzugsweise jeder der Stückgutwege durch das erste Kanalelement hindurch führt.

Eine Position erster Art der Kanalelemente ist vorteilhafterweise derart ausgestaltet, dass der Stückgutweg durch das zweite Kanalelement hindurch führt.

Insbesondere kann die Position erster Art der Kanalelemente derart ausgestaltet sein, dass die Wände des zweiten Kanalelements im Wesentlichen in Verlängerung zu den Wänden des ersten Kanalelements platziert sind.

Vorzugsweise ist die Position erster Art der Kanalelemente eine Position zum Einsortieren von Stückgut in eine erste der Zielstellen. Wenn die Kanalelemente in der Position erster Art positioniert sind, dann führt der Stückgutweg zweckmäßigerweise zur ersten Zielstelle.

Eine Position zweiter Art der Kanalelemente ist vorzugsweise derart ausgestaltet, dass der Stückgutweg entlang einer Außenseite des zweiten Kanalelements führt. Das heißt, dass die Position zweiter Art der Kanalelemente vorzugsweise derart ausgestaltet ist, dass der Stückgutweg vorzugsweise nicht durch das zweite Kanalelement hindurch führt.

Insbesondere kann die Position zweiter Art der Kanalelemente derart ausgestaltet sein, dass der erste Kanal des ersten Kanalelements auf/an einer Außenseite des zweiten Kanalelements mündet.

Die Sortiervorrichtung kann zwei solcher Positionen zweiter Art aufweisen.

Zweckmäßigerweise führt der Stückgutweg in der ersten Position zweiter Art entlang einer ersten Außenseite des zweiten Kanalelements. Das heißt, dass die erste Position zweiter Art der Kanalelemente zweckmäßigerweise derart ausgestaltet ist, dass der Stückgutweg entlang einer ersten Außenseite des zweiten Kanalelements führt.

Es ist bevorzugt, wenn der Stückgutweg in der zweiten Position zweiter Art entlang einer der ersten Außenseite entgegengesetzten zweiten Außenseite des zweiten Kanalelements führt. Das heißt, dass die zweite Position zweiter Art der Kanalelemente derart ausgestaltet sein kann, dass der Stückgutweg entlang einer der ersten Außenseite entgegengesetzten zweiten Außenseite des zweiten Kanalelements führt. Zweckmäßigerweise ist die jeweilige Position zweiter Art der Kanalelemente eine Position zum Einsortieren von Stückgut in eine zweite oder ggf. dritte der Zielstellen. Wenn die Kanalelemente in der ersten Position zweiter Art positioniert sind, dann führt der Stückgutweg vorzugsweise zur zweiten Zielstelle. Wenn die Kanalelemente in der zweiten Position zweiter Art positioniert sind, dann führt der Stückgutweg vorzugsweise zur dritten Zielstelle.

Eine Position zweiter Art der Kanalelemente, insbesondere zumindest eine der zuvor genannten Positionen zweiter Art, kann derart ausgestaltet sein, dass eine Außenseite des zweiten Kanalelements im Wesentlichen in Verlängerung zu einer Innenseite des ersten Kanalelements platziert ist.

Insbesondere kann zumindest eine der Positionen zweiter Art derart ausgestaltet sein, dass der Stückgutweg entlang einer Innenseite des ersten Kanalelements und entlang einer Außenseite des zweiten Kanalelements verläuft.

Die mehreren Zielstellen umfassen mindestens zwei Zielstellen. Vorzugsweise sind die Kanalelemente in zumindest zwei der zuvor genannten Positionen positionierbar.

In einer bevorzugten Ausgestaltung der Erfindung umfassen die mehreren Zielstellen mindestens drei Zielstellen, insbesondere genau drei Zielstellen. Vorzugsweise sind die Kanalelemente zumindest in den drei zuvor genannten Positionen, nämlich der Position erster Art, der ersten Position zweiter Art und der zweiten Position zweiter Art, positionierbar.

Das erste Kanalelement kann ein oberes Kanalelement sein. Weiter kann das zweite Kanalelement ein unteres Kanalelement sein. Insbesondere kann das erste Kanalelement oberhalb des zweiten Kanalelements angeordnet sein.

Weiter ist es vorteilhaft, wenn die beiden Kanalelemente oberhalb der Zielstellen angeordnet sind.

Auf diese Weise kann die Beförderung eines Stückguts zu einer der mehreren Zielstellen unter Verwendung der Schwerkraft erfolgen.

Beispielsweise können die Kanalelemente zumindest im Wesentlichen vertikal angeordnet sein. Auf diese Weise können die von den Kanalelementen ausgebildeten Kanäle mindestens in einer Positionierung der Kanalelemente zumindest im Wesentlichen vertikal verlaufen.

Weiter können die Kanalelemente zum Beispiel auf einer schiefen Ebene angeordnet sein. Auf diese Weise können die von den Kanalelementen ausgebildeten Kanäle geneigt verlaufen.

Die Drehachse des ersten Kanalelements kann an der zumindest im Wesentlichen von dem zweiten Kanalelement weg gerichteten Hälfte des ersten Kanalelements, insbesondere an dem zumindest im Wesentlichen von dem zweiten Kanalelement weg gerichteten Ende des ersten Kanalelements, angeordnet sein.

Weiter kann die Drehachse des zweiten Kanalelements an der zumindest im Wesentlichen von dem ersten Kanalelement weg gerichteten Hälfte des zweiten Kanalelements, insbesondere an dem zumindest im Wesentlichen von dem ersten Kanalelement weg gerichteten Ende des zweiten Kanalelements, angeordnet sein.

Es ist vorteilhaft, wenn die Drehachsen der Kanalelemente an zumindest im Wesentlichen voneinander weg gerichteten Hälften der beiden Kanalelemente, insbesondere an zumindest im Wesentlichen voneinander weg gerichteten Enden der beiden Kanalelemente, angeordnet sind.

Beispielsweise kann das erste Kanalelement ein oberes Kanalelement sein, welches seine Drehachse an seinem oberen Ende aufweist, und das zweite Kanalelement ein unteres Kanalelement sein, welches seine Drehachse an seinem unteren Ende aufweist. Andere Ausführungen sind jedoch auch möglich.

Das erste Kanalelement kann trichterförmig ausgestaltet sein. Insbesondere kann ein zumindest im Wesentlichen zum zweiten Kanalelement gerichtetes Ende des ersten Kanalelements eine kleinere Querschnittsfläche aufweisen als ein entgegengesetztes, im Wesentlichen von dem zweiten Kanalelement weg gerichtetes Ende des ersten Kanalelements.

Prinzipiell können die Querschnittsflächen an den beiden Enden des ersten Kanalelements auch zumindest im Wesentlichen gleich groß sein.

Weiter kann das zweite Kanalelement trichterförmig ausgestaltet sein. Insbesondere kann ein zumindest im Wesentlichen zum ersten Kanalelement gerichtetes Ende des zweiten Kanalelements eine kleinere Querschnittsfläche aufweisen als ein entgegengesetztes, im Wesentlichen von dem ersten Kanalelement weg gerichtetes Ende des zweiten Kanalelements.

Prinzipiell können die Querschnittsflächen an den beiden Enden des zweiten Kanalelements auch zumindest im Wesentlichen gleich groß sein.

Stückgut können zum Beispiel Sendungen, beispielsweise Postsendungen, sein. Stückgut können insbesondere Pakete, Päckchen, Briefe o. Ä. sein.

Weiter können Stückgut zu sortierende Waren sein.

Die Sortiervorrichtung kann beispielsweise in der Logistik, Distribution, Verteilung, Versand, Zulieferung, Auslieferung usw. Verwendung finden.

Ferner ist die Erfindung gerichtet auf eine Kaskaden-Sortiervorrichtung mit mehreren der zuvor genannten Sortiervorrichtungen und/oder seiner Weiterbildungen, wobei sich an jede Zielstelle einer ersten der Sortiervorrichtungen jeweils eine andere der mehreren Sortiervorrichtungen anschließt.

Auf diese Weise kann eine kaskadenartige Sortierung von Stückgut erreicht werden.

Wenn jede der Sortiervorrichtungen n Zielstellen, insbesondere drei Zielstellen, aufweist, kann auf diese Weise eine (n*n)-fache Sortierung, insbesondere eine 9-fache Sortierung, erreicht werden.

Die Kaskaden-Sortiervorrichtung kann eine besonders platzsparende Sortierung ermöglichen.

Weiter ist die Erfindung gerichtet auf eine Verwendung der zuvor genannten Sortiervorrichtung und/oder der zuvor genannten Kaskaden-Sortiervorrichtung und/oder einer ihrer Weiterbildungen als Mehrfach-Endstelle einer Sortieranlage.

Ferner ist die Erfindung gerichtet auf eine Sortieranlage mit mehreren der zuvor genannten Sortiervorrichtungen und/oder mehreren der zuvor genannten Kaskaden-Sortiervorrichtungen, wobei die Sortiervorrichtungen und/oder die Kaskaden-Sortiervorrichtungen zumindest in einer Reihe angeordnet sind, insbesondere in zwei Reihen. Die beiden Reihen können beispielsweise zueinander spiegelbildlich ausgebildet sein.

Die Sortieranlage weist einen Sorter auf, welcher dazu eingerichtet ist, Stückgut in die Sortiervorrichtungen und/oder die Kaskaden-Sortiervorrichtungen zu schleusen.

Das heißt, dass der Sorter dazu eingerichtet sein kann, den Sortiervorrichtungen und/oder den Kaskaden-Sortiervorrichtungen Stückgut zuzuführen.

Der Sorter kann z. B. ein Querbandsorter, ein Kippschalensorter, ein Schiebeschuhsorter, ein Fallklappensorter o. Ä. sein.

Zweckmäßigerweise hat der Sorter einer Förderrichtung, in welcher der Sorter das Stückgut befördert.

Es ist vorteilhaft, wenn der Kippmechanismus der jeweiligen Sortiervorrichtung derart eingerichtet ist, dass die Kippbewegung der Kanalelemente der jeweiligen Sortiervorrichtung im Winkel, insbesondere zumindest im Wesentlichen im rechten Winkel, zu der Förderrichtung des Sorters erfolgt. Insbesondere kann die Kippbewegung der Kanalelemente der jeweiligen Sortiervorrichtung zumindest im Wesentlichen senkrecht zu der Förderrichtung des Sorters erfolgen.

Zumindest im Wesentlichen senkrecht und/oder zumindest im Wesentlichen im rechten Winkel kann eine Abweichung von bis zu 10° zu der senkrechten Anordnung bzw. zu der Anordnung im rechten Winkel zulassen.

Der Sorter kann eine Ausschleusrichtung haben. Die Ausschleusrichtung kann eine Richtung sein, in welcher der Sorter das Stückgut zur Übergabe an die jeweilige Sortiervorrichtung ausschleust. Weiter kann die Ausschleusrichtung eine Richtung sein, in welcher der Sorter das Stückgut der jeweiligen Sortiervorrichtung bzw. Kaskaden-Sortiervorrichtung zuführt. Die Ausschleusrichtung kann sich von einer Bewegungsrichtung des Stückguts unterscheiden. Insbesondere können sich die Förderrichtung und die Ausschleusrichtung in der Bewegungsrichtung des Stückguts überlagern.

Es ist vorteilhaft, wenn der Kippmechanismus der jeweiligen Sortiervorrichtung derart eingerichtet ist, dass die Kippbewegung der Kanalelemente der jeweiligen Sortiervorrichtung zumindest im Wesentlichen parallel zu der Ausschleusrichtung des Sorters erfolgt.

Zumindest im Wesentlichen parallel kann eine Abweichung von bis zu 10° zu der parallelen Anordnung zulassen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit der erfindungsgemäßen Sortiervorrichtung, der Kaskaden-Sortiervorrichtung, der Verwendung und der erfindungsgemäßen Sortieranlage kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: eine Sortiervorrichtung für Stückgut mit zwei Kanalelementen in der Seitenansicht, wobei die Kanalelemente in der Position erster Art positioniert sind,
- FIG 2: die Sortiervorrichtung aus FIG 1 in einer dreidimensionalen Ansicht,
- FIG 3: die Sortiervorrichtung aus FIG 1, wobei die Kanalelemente in der ersten Position zweiter Art positioniert sind,
- FIG 4: die Sortiervorrichtung aus FIG 3 in einer dreidimensionalen Ansicht,
- FIG 5: die Sortiervorrichtung aus FIG 1, wobei die Kanalelemente in der zweiten Position zweiter Art positioniert sind,
- FIG 6: die Sortiervorrichtung aus FIG 5 in einer dreidimensionalen Ansicht,
- FIG 7: eine Sortieranlage mit mehreren Sortiervorrichtungen der in FIG 1 bis FIG 6 beschriebenen Art,
- FIG 8: eine Kaskaden-Sortiervorrichtung,
- FIG 9: eine andere Sortiervorrichtung für Stückgut mit zwei Kanalelementen, welche auf einer schiefen Ebene angeordnet sind,
- FIG 10: die Sortiervorrichtng aus FIG 9 in einer anderen Ansicht, wobei die Kanalelemente in der Position erster Art positioniert sind,
- FIG 11: die Sortiervorrichtng aus FIG 9 und 10, wobei die Kanalelemente in einer ersten Position zweiter Art positioniert sind,
- FIG 12: die Sortiervorrichtng aus FIG 9 und 10, wobei die Kanalelemente in der zweiten Position zweiter Art positioniert sind,
- FIG 13: eine weitere Sortiervorrichtung für Stückgut mit zwei Kanalelementen, wobei die Kanalelemente in ihrer ersten Position positioniert sind, und
- FIG 14: die Sortiervorrichtung aus FIG 13, wobei die Kanalelemente in ihrer zweiten Position positioniert sind
- FIG 15: die Sortiervorrichtung aus FIG 13, wobei die Kanalelemente in ihrer dritten Position positioniert sind.

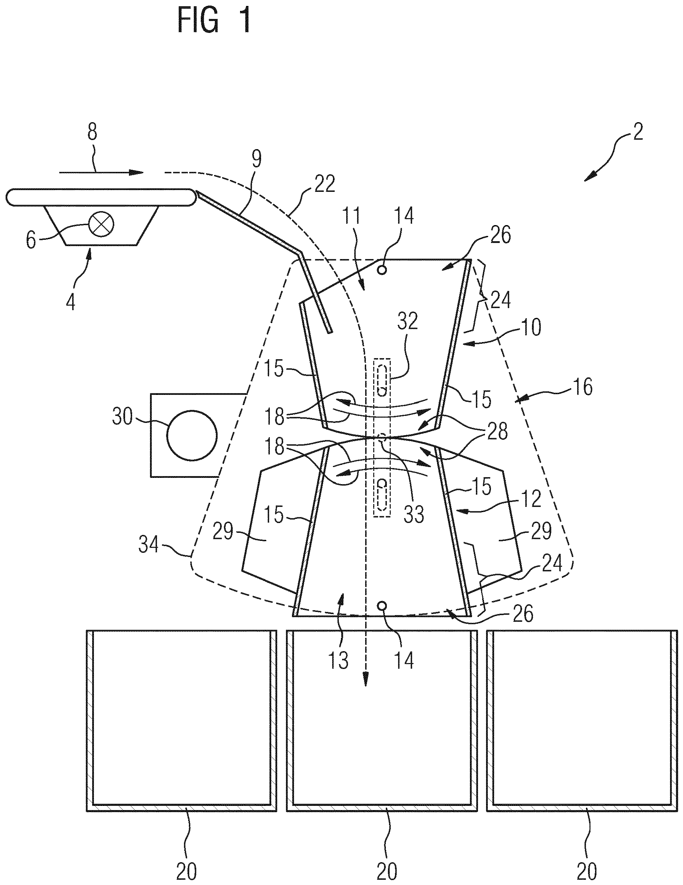

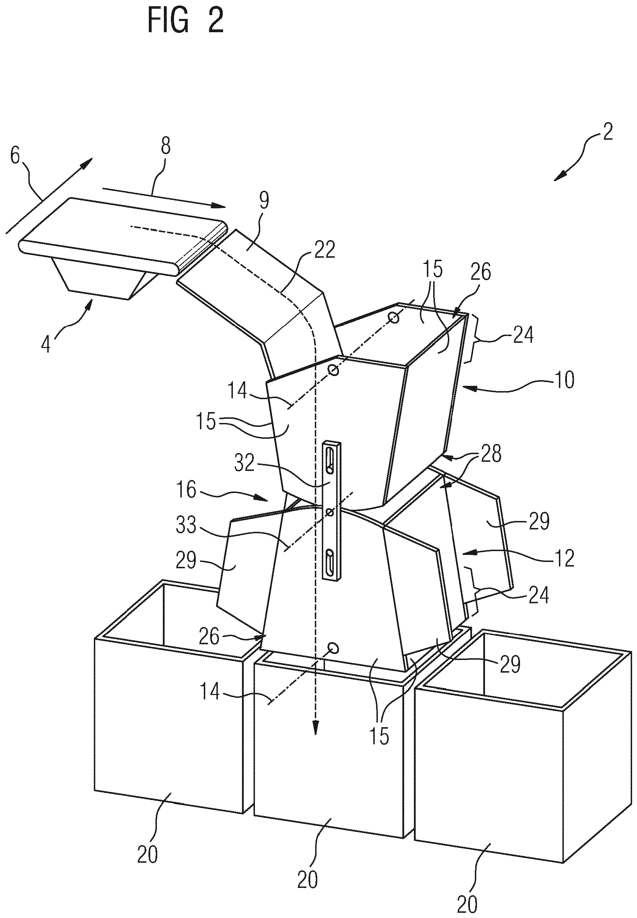

FIG 1 zeigt schematisch eine Sortiervorrichtung 2 für Stückgut in der Seitenansicht. FIG 2 zeigt die Sortiervorrichtung 2 aus FIG 1 in einer dreidimensionalen Ansicht.

Ferner zeigen FIG 1 und FIG 2 einen Sorter 4, welcher dazu eingerichtet ist, Stückgut in die Sortiervorrichtung 2 zu schleusen. Die Sortiervorrichtung 2 wird als Mehrfach-Endstelle für den Sorter 4 verwendet.

Der Sorter 4 hat einer Förderrichtung 6, in welcher der Sorter 4 das Stückgut befördert. In diesem Beispiel zeigt die Förderrichtung zeichnungsgemäß nach hinten (siehe FIG 2).

Außerdem hat der Sorter 4 eine Ausschleusrichtung 8, in welcher der Sorter 4 das Stückgut ausschleust und der Sortiervorrichtung 2 zuführt. Das heißt, dass der Sorter 4 in der Ausschleusrichtung 8 das Stückgut in die Sortiervorrichtung 2 schleust. Die Ausschleusrichtung 8 zeigt in diesem Beispiel zeichnungsgemäß nach rechts. In diesem Beispiel ist die Ausschleusrichtung 8 also senkrecht zur Förderrichtung 6.

Die Sortiervorrichtung 2 umfasst ein erstes Kanalelement 10 und ein zweites Kanalelement 12, welche jeweils auf einer Drehachse 14 gelagert sind.

Das erste Kanalelement 10 ist als oberes Kanalelement und das zweite Kanalelement 12 als unteres Kanalelement ausgeführt. Das heißt, dass das erste Kanalelement 10 oberhalb des zweiten Kanalelements 12 angeordnet ist.

Das erste Kanalelement 10 bildet einen ersten Kanal 11 aus und das zweite Kanalelement 12 bildet einen zweiten Kanal 13 aus. Der jeweilige Kanal 11, 13 wird von den jeweiligen Wänden 15 der jeweiligen Kanalelemente 10, 12 seitlich begrenzt.

Die Sortiervorrichtung umfasst einen Übergangsbereich 9, welcher vor den Kanalelementen 10, 12 angeordnet ist. Insbesondere ist der Übergangsbereich 9 zwischen dem Sorter 4 und dem ersten Kanalelement 10 angeordnet. Der Übergangsbereich 9 mündet in dem ersten Kanalelement 10. In diesem Beispiel ist der Übergangsbereich 9 als Rutsche ausgeführt. Der Übergangsbereich 9 kann aber auch Rollen, ein Förderband o. Ä. aufweisen. Prinzipiell ist es auch möglich, auf den Übergangsbereich 9 zu verzichten, beispielsweise wenn das erste Kanalelement 10 direkt an den Sorter 4 anschließt.

Außerdem umfasst die Sortiervorrichtung 2 einen Kippmechanismus 16, welcher im aktivierten Zustand eine Kippbewegung 18 der beiden Kanalelemente 10, 12 um ihre jeweilige Drehachse 14 bewirkt. Die Kippbewegung 18 ist in FIG 1 mittels Pfeilen angedeutet.

Ferner umfasst die Sortiervorrichtung 2 mehrere Zielstellen 20. Die Zielstellen 20 sind unterhalb der beiden Kanalelemente 10, 12 angeordnet. In diesem Beispiel umfasst die Sortiervorrichtung 2 drei Zielstellen 20.

Die Kanalelemente 10, 12 sind unter Verwendung des Kippmechanismus 16 zwischen mehreren Positionen (vgl. FIG 1 bis FIG 6) jeweils zum Einsortieren von Stückgut in eine der mehreren Zielstellen 20 beweglich (Kippbewegung: Pfeile 18).

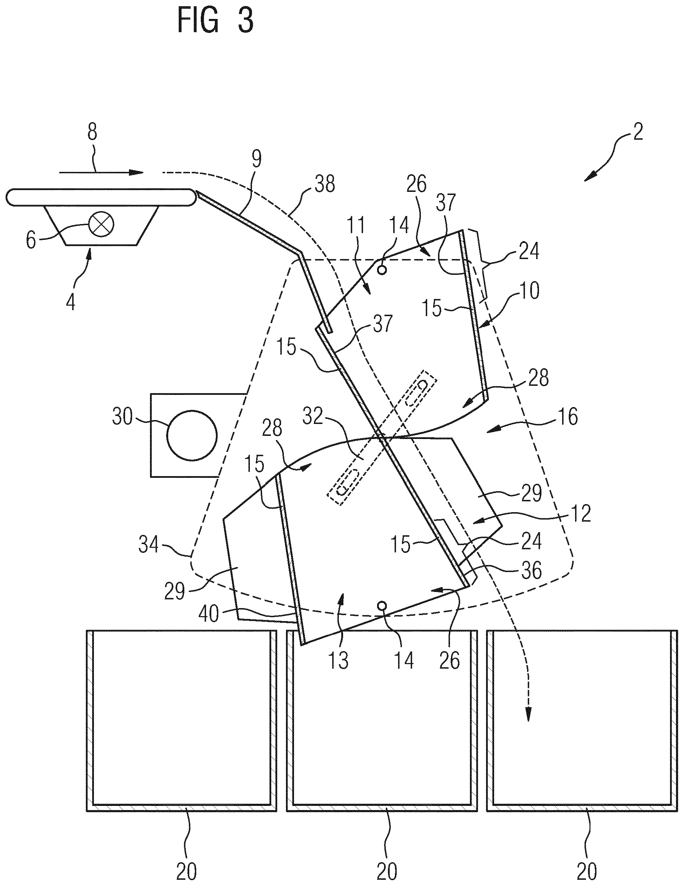

Mittels der Kanalelemente 10, 12 kann auf diese Weise ein jeweiliger Stückgutweg 22, 38, 42 (vgl. auch FIG 3 bis FIG 6) zum Einsortieren von Stückgut vorgegeben werden. Der Stückgutweg 22, 38, 42 ist von den Positionen der Kanalelemente 10, 12 abhängig.

In FIG 1 und FIG 2 sind die Kanalelemente 10, 12 in einer Position erster Art positioniert. Mit anderen Worten: Die Kanalelemente befinden sich in FIG 1 und FIG 2 in ihrer ersten Position.

Die Kanalelemente 10, 12 sind vertikal angeordnet. Das heißt, die von den Kanalelementen 10, 12 ausgebildeten Kanäle 11, 13 verlaufen zumindest in einer Positionierung der Kanalelemente 10, 12, nämlich zumindest in der in FIG 1 und FIG 2 gezeigten Positionierung der Kanalelemente 10, 12, vertikal.

Befinden sich die Kanalelemente 10, 12 in der Position erster Art (wie in FIG 1 und FIG 2 gezeigt), dann wird der Stückgutweg 22 vorgegeben, welcher zu einer ersten der Zielstellen 20 führt. In diesem Beispiel ist die erste Zielstelle 20 die zeichnungsgemäß mittlere Zielstelle 20.

In der Position erster Art der Kanalelemente 10, 12 mündet der erste Kanal 11 des ersten Kanalelements 10 in dem zweiten Kanal 13 des zweiten Kanalelements 12.

Insbesondere sind in der Position erster Art der Kanalelemente 10, 12 die Wände 15 des zweiten Kanalelements 12 im Wesentlichen in Verlängerung zu den Wänden 15 des ersten Kanalelements 10 platziert.

Der Stückgutweg 22 führt in der Position erster Art der Kanalelemente 10, 12 durch das erste Kanalelement 10 und durch das zweite Kanalelement 12 hindurch.

Das erste Kanalelement 10 weist eine von dem zweiten Kanalelement 12 weg gerichtete Hälfte 24 auf. Ferner weist das erste Kanalelement 10 ein von dem zweiten Kanalelement 12 weg gerichtetes Ende 26 auf. Die von dem zweiten Kanalelement 12 weg gerichtete Hälfte 24 des ersten Kanalelements 10 umfasst das von dem zweiten Kanalelement 12 weg gerichtete Ende 26 des ersten Kanalelements 10. Das weg gerichtete Ende 26 kann beispielsweise ein weg gerichtetes Zehntel, insbesondere in Längsrichtung des Kanalelements 10, sein.

In diesem Beispiel, in dem das erste Kanalelement 10 ein oberes Kanalelement ist, ist das von dem zweiten Kanalelement 12 weg gerichtete Ende 26 des ersten Kanalelements 10 ein oberes Ende des ersten Kanalelements 10.

Analog weist das zweite Kanalelement 12 eine von dem ersten Kanalelement 10 weg gerichtete Hälfte 24 auf. Ferner weist das zweite Kanalelement 12 ein von dem ersten Kanalelement 10 weg gerichtetes Ende 26 auf. Die von dem ersten Kanalelement 10 weg gerichtete Hälfte 24 des zweiten Kanalelements 12 umfasst das von dem ersten Kanalelement 10 weg gerichtete Ende 26 des zweiten Kanalelements 12. Das weg gerichtete Ende 26 kann beispielsweise ein weg gerichtetes Zehntel, insbesondere in Längsrichtung des Kanalelements 12, sein.

In diesem Beispiel, in dem das zweite Kanalelement 12 ein unteres Kanalelement ist, ist das von dem ersten Kanalelement 10 weg gerichtete Ende 26 des zweiten Kanalelements 12 ein unteres Ende des zweiten Kanalelements 12.

Die jeweils von dem anderen Kanalelement 10, 12 weg gerichteten Enden 26 der Kanalelemente 10, 12 sind zumindest im Wesentlichen voneinander weg gerichtet.

Ferner weist das erste Kanalelement 10 ein zu dem zweiten Kanalelement 12 hin gerichtetes Ende 28 auf. Außerdem weist das zweite Kanalelement 12 ein zu dem ersten Kanalelement 10 hin gerichtetes Ende 28 auf. Die jeweils zu dem anderen Kanalelement hin gerichteten Enden 28 sind zumindest im Wesentlichen zueinander gerichtet.

In diesem Beispiel sind die beiden Kanalelemente 10, 12 trichterförmig ausgestaltet. Insbesondere weisen zueinander gerichteten Enden 28 der Kanalelemente 10, 12 jeweils eine kleinere Querschnittsfläche auf als die jeweiligen entgegengesetzten, voneinander weg gerichteten Enden 26 der Kanalelemente 10, 12.

Die Drehachsen 14 der Kanalelemente 10, 12 sind an den voneinander weg gerichteten Enden 26 der beiden Kanalelemente 10, 12 angeordnet.

Außerdem umfasst das zweite Kanalelement 12 in diesem Beispiel mehrere Leitelemente 29. Die Leitelemente 29 sind mit den Wänden 15 des zweiten Kanals 12 verbunden und nach außen gerichtet. Die Leitelemente 29 zeigen in die Richtung, in welcher die Kippbewegung 18 der Kanalelemente 10, 12 erfolgt.

Der Kippmechanismus 16 weist einen Motor 30 auf. Einer besseren Übersichtlichkeit halber ist der Motor 30 in FIG 2 nicht dargestellt. Der Motor 30 kann - insbesondere im aktivierten Zustand - die Kippbewegung 18 der Kanalelemente 10, 12 bewirken. Das heißt, dass der Motor 30 die Kanalelemente 10, 12 verkippen kann.

Der Motor 30 ist mit einem der Kanalelemente 10, 12 zu dessen Antrieb gekoppelt (nicht dargestellt).

Der Kippmechanismus 16 weist außerdem ein Koppelmittel 32 auf. In diesem Beispiel ist das Koppelmittel 32 als Koppelstange ausgebildet. Das Koppelmittel 32 verbindet in diesem Beispiel die Kanalelemente 10, 12 miteinander. Das als Koppelstange ausgebildete Koppelmittel 32 weist außerdem eine feste Drehachse 33 auf, um welche das Koppelmittel 32 drehbar gelagert ist.

Die Kippbewegungen der Kanalelemente 10, 12 sind unter Verwendung des Koppelmittels 32 gekoppelt.

Unter Verwendung des Koppelmittels 32 wird - im aktivierten Zustand des Kippmechanismus 16 - eine gleichzeitige Kippbewegung 18 der beiden Kanalelemente 10, 12 bewirkt.

Unter Verwendung des Koppelmittels 32 sind die Kippbewegungen 18 der beiden Kanalelemente 10, 12 außerdem derart miteinander gekoppelt, dass die Kippbewegung 18 des ersten Kanalelements 10 in die gleiche Drehrichtung verläuft wie die Kippbewegung 18 des zweiten Kanalelements 12.

Die in FIG 1 und FIG 2 zueinander gerichteten Enden 28 der Kanalelemente 10, 12 führen auf diese Weise beim Verkippen der Kanalelemente 10, 12 gegenläufige Bewegungen aus.

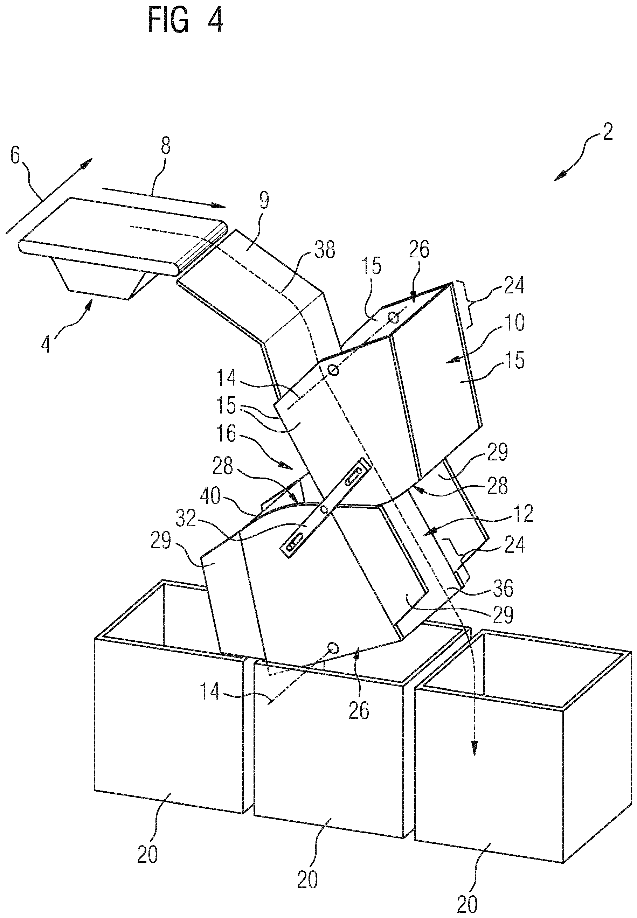

Wenn beispielsweise das erste Kanalelement 10 die Kippbewegung 18 zeichnungsgemäß gegen den Uhrzeigersinn ausführt, dann führt das zweite Kanalelement 12 auch die Kippbewegung 18 in dieser Drehrichtung, hier gegen den Uhrzeigersinn, aus. Ausgehend von der Position erster Art der Kanalelemente 10, 12 (FIG 1 und FIG 2) werden die Kanalelemente 10, 12 dabei in eine erste Position zweiter Art (siehe FIG 3 und FIG 4) verstellt. Beim Verkippen der Kanalelemente 10, 12 bewegt sich dabei das untere Ende 28 des ersten Kanalelements 10 zeichnungsgemäß nach rechts und das obere Ende 28 des zweiten Kanalelements 12 zeichnungsgemäß nach links.

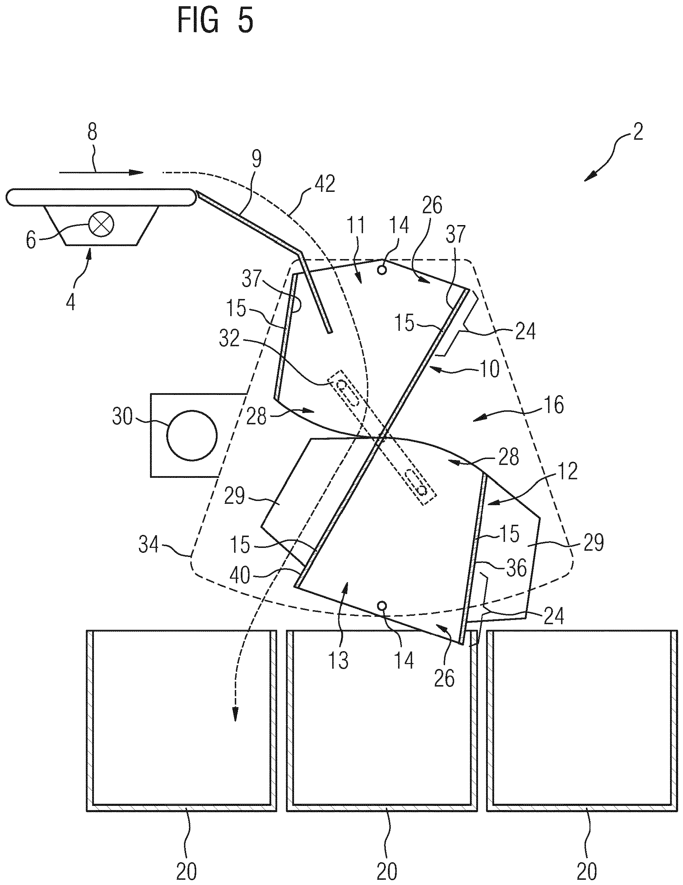

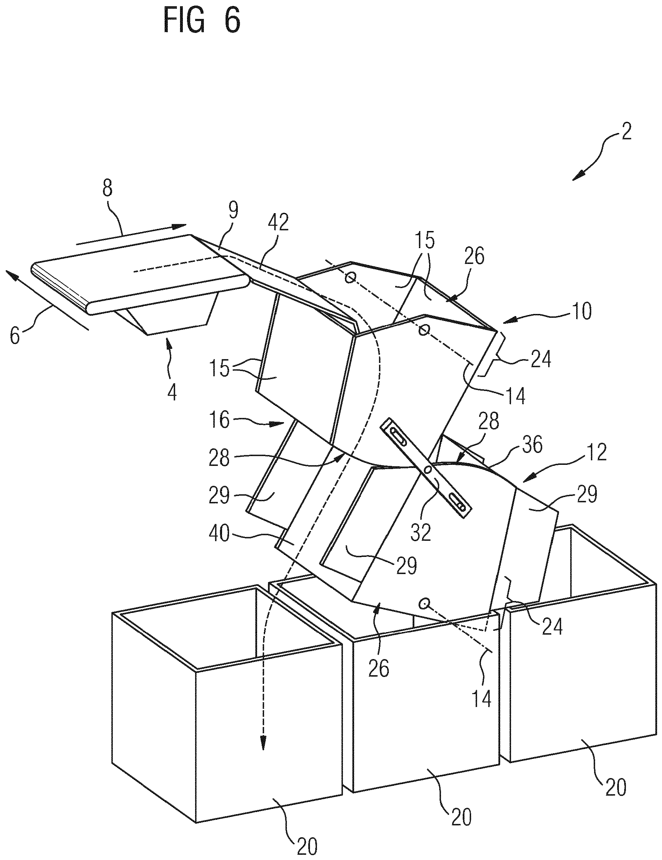

Wenn beispielsweise das erste Kanalelement 10 die Kippbewegung 18 zeichnungsgemäß im Uhrzeigersinn ausführt, dann führt das zweite Kanalelement 12 auch die Kippbewegung 18 in dieser Drehrichtung, hier im Uhrzeigersinn, aus. Ausgehend von der Position erster Art der Kanalelemente 10, 12 (FIG 1 und FIG 2) werden die Kanalelemente 10, 12 dabei in eine zweite Position zweiter Art (siehe FIG 5 und FIG 6) verstellt. Beim Verkippen der Kanalelemente 10, 12 bewegt sich dabei das untere Ende 28 des ersten Kanalelements 10 zeichnungsgemäß nach links und das obere Ende 28 des zweiten Kanalelements 12 zeichnungsgemäß nach rechts.

Die Sortiervorrichtung 2 kann außerdem ein Begrenzungselement 34 aufweisen, wie in diesem Ausführungsbeispiel gezeigt. Das Begrenzungselement 34 ist in diesem Beispiel als Gehäuse der Kanalelemente 10, 12 ausgebildet. Das Begrenzungselement 34 ist in FIG 1 gestrichelt eingezeichnet. Um eine bessere Sichtbarkeit der Kanalelemente 10, 12 zu gewährleisten, ist das Begrenzungselement 34 in FIG 2 nicht gezeigt.

Das Begrenzungselement 34 begrenzt in diesem Beispiel die Kippbewegung der Kanalelemente 10, 12. Auf diese Weise kann beispielsweise eine Verkippung auf maximal ±45°, d. h. auf eine Winkelverstellbarkeit um maximal 90°, begrenzt werden.

Die Begrenzungselemente 34 können außerdem die Stückgutwege 38, 42 in der Position zweiter Art der Kanalelemente 10, 12 begrenzen (siehe FIG 3 und FIG 5).

Außerdem können die Kanalelemente 10, 12 in das als Gehäuse ausgeführte Begrenzungselement 34 eingehangen werden/sein.

Die Sortiervorrichtung 2 ist robust. Weiter ist die Sortiervorrichtung 2 platzsparend. Außerdem ermöglicht die Sortiervorrichtung 2 ein schnelles Umschalten zwischen den Positionen. Auf diese Weise kann eine effiziente Sortierung von Stückgut in die Zielstellen 20 erfolgen.

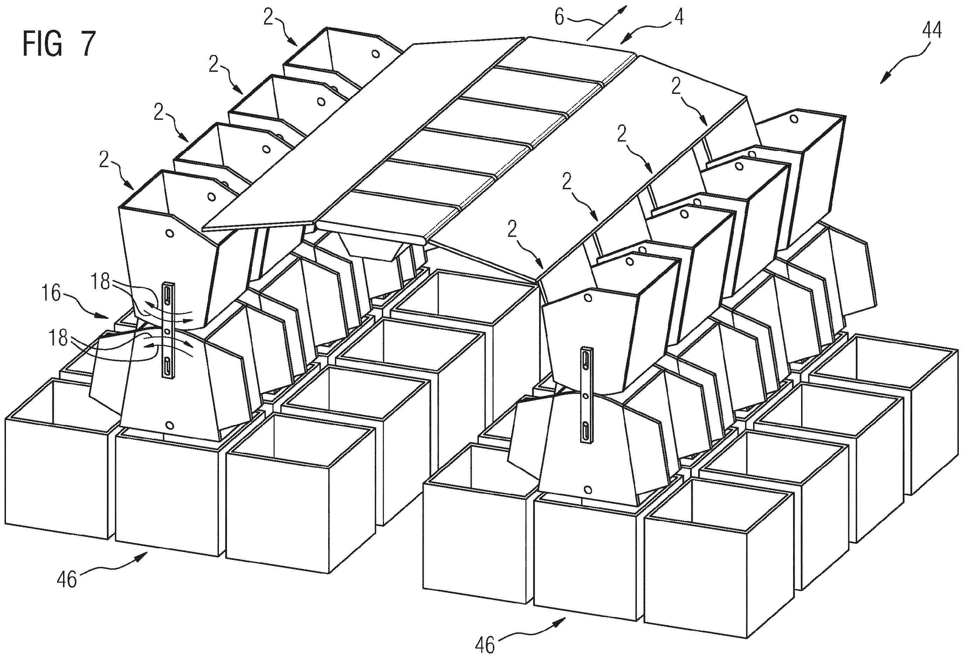

Mehrere solcher Sortiervorrichtungen 2 können in zumindest einer Reihe angeordnet werden und gemeinsam mit dem Sorter 4 eine Sortieranlage ausbilden (vgl. FIG 7).

FIG 3 zeigt die Sortiervorrichtung 2 aus FIG 1, wobei die Kanalelemente 10, 12 in der ersten Position zweiter Art positioniert sind. In FIG 4 ist die Sortiervorrichtung aus FIG 3 in einer dreidimensionalen Ansicht dargestellt.

In der ersten Position zweiter Art der Kanalelemente 10, 12 mündet der erste Kanal 11 des ersten Kanalelements 11 auf/an einer ersten Außenseite 36 des zweiten Kanalelements 12.

Befinden sich die Kanalelemente 10, 12 in der ersten Position zweiter Art (wie in FIG 3 und FIG 4 gezeigt), dann wird der Stückgutweg 38 vorgegeben, welcher zu einer zweiten der Zielstellen 20 führt. In diesem Beispiel ist die zweite Zielstelle 20 die zeichnungsgemäß rechte Zielstelle 20.

Der Stückgutweg 38 führt in der ersten Position zweiter Art der Kanalelemente 10, 12 durch das erste Kanalelement 10 hindurch und entlang der ersten Außenseite 36 des zweiten Kanalelements 12.

In der ersten Position zweiter Art ist das zweite Kanalelement 12 gegenüber der zuvor genannten Position erster Art zeichnungsgemäß nach links (d. h. gegen den Uhrzeigersinn) verkippt. Die erste Außenseite 36 des zweiten Kanalelements 12, an welcher der Stückgutweg 38 in der ersten Position zweiter Art entlang führt, liegt in der entgegengesetzten Richtung zu der Richtung der Kippbewegung 18 bzw. der Richtung des Verkippens. In diesem Fall ist die erste Außenseite 36 des zweiten Kanalelements 12 also eine zeichnungsgemäß rechte Außenseite des zweiten Kanalelements 12.

In der ersten Position zweiter Art der Kanalelemente 10, 12 ist die erste Außenseite 36 des zweiten Kanalelements 12 im Wesentlichen in Verlängerung zu einer Innenseite 37 des ersten Kanalelements 10 platziert. Insbesondere ist in der ersten Position zweiter Art der Kanalelemente 10, 12 die erste, zeichnungsgemäß rechte Außenseite 36 des zweiten Kanalelements 12 im Wesentlichen in Verlängerung zu der zeichnungsgemäßen linken Innenseite 37 des ersten Kanalelements 10 platziert.

Der Stückgutweg 38 führt in der ersten Position zweiter Art der Kanalelemente 10, 12 entlang der - insbesondere zeichnungsgemäßen linken - Innenseite 37 des ersten Kanalelements 10 und entlang der - insbesondere zeichnungsgemäßen rechten - ersten Außenseite 36 des zweiten Kanalelements 12.

Die Leitelemente 29 begrenzen den Stückgutweg 38 seitlich. Auch das als Gehäuse ausgebildete Begrenzungselement 34 begrenzt den Stückgutweg 38. Auf diese Weise kann eine Führung von Stückgut in die zweite Zielstelle 20 gewährleistet werden.

FIG 5 zeigt die Sortiervorrichtung aus FIG 1, wobei die Kanalelemente 10, 12 in der zweiten Position zweiter Art positioniert sind. In FIG 6 ist die Sortiervorrichtung aus FIG 5 in einer dreidimensionalen Ansicht dargestellt.

In der zweiten Position zweiter Art der Kanalelemente 10, 12 mündet der erste Kanal 11 des ersten Kanalelements 10 auf/an einer der ersten Außenseite 36 entgegengesetzten zweiten Außenseite 40 des zweiten Kanalelements 12.

Befinden sich die Kanalelemente 10, 12 in der zweiten Position zweiter Art (wie in FIG 5 und FIG 6 gezeigt), dann wird der Stückgutweg 42 vorgegeben, welcher zu einer dritten der Zielstellen 20 führt. In diesem Beispiel ist die dritte Zielstelle 20 die zeichnungsgemäß linke Zielstelle 20.

Der Stückgutweg 42 führt in der zweiten Position zweiter Art der Kanalelemente 10, 12 durch das erste Kanalelement 10 hindurch und entlang der zweiten Außenseite 40 des zweiten Kanalelements 12. Die zweite Außenseite 40 des zweiten Kanalelements 12 ist eine der im Zusammenhang mit FIG 3 und FIG 4 genannten ersten Außenseite 36 entgegengesetzte Außenseite.

In der zweiten Position zweiter Art ist das zweite Kanalelement 12 gegenüber der zuvor genannten Position erster Art zeichnungsgemäß nach rechts (d. h. im Uhrzeigersinn) verkippt. Die zweite Außenseite 40 des zweiten Kanalelements 12, an welcher der Stückgutweg 42 in der zweiten Position zweiter Art entlang führt, liegt in der entgegengesetzten Richtung zu der Richtung der Kippbewegung 18 bzw. des Verkippens. In diesem Fall ist die zweite Außenseite 40 des zweiten Kanalelements 12 also eine zeichnungsgemäß linke Außenseite des zweiten Kanalelements 12.

In der zweiten Position zweiter Art der Kanalelemente 10, 12 ist die zweite Außenseite 40 des zweiten Kanalelements 12 im Wesentlichen in Verlängerung zu einer Innenseite 37 des ersten Kanalelements 10 platziert. Insbesondere ist in der zweiten Position zweiter Art der Kanalelemente 10, 12 die zweite, zeichnungsgemäß linke Außenseite 40 des zweiten Kanalelements 12 im Wesentlichen in Verlängerung zu der zeichnungsgemäßen rechten Innenseite 37 des ersten Kanalelements 10 platziert.

Der Stückgutweg 42 führt in der zweiten Position zweiter Art der Kanalelemente 10, 12 zumindest teilweise entlang der - insbesondere zeichnungsgemäßen rechten - Innenseite 37 des ersten Kanalelements 10 und entlang der - insbesondere zeichnungsgemäßen linken - zweiten Außenseite 40 des zweiten Kanalelements 12.

Die Leitelemente 29 begrenzen den Stückgutweg 42 seitlich. Auch das als Gehäuse ausgebildete Begrenzungselement 34 begrenzt den Stückgutweg 42. Auf diese Weise kann eine Führung von Stückgut in die dritte Zielstelle 20 gewährleistet werden.

FIG 7 zeigt schematisch eine Sortieranlage 44 mit mehreren Sortiervorrichtungen 2 der in FIG 1 bis FIG 6 beschriebenen Art. Die Sortiervorrichtungen 2 sind in zwei Reihen 46 angeordnet, wobei die Reihen 46 von Sortiervorrichtungen 2 spiegelbild-symmetrisch zueinander sind.

Außerdem umfasst die Sortieranlage 44 einen Sorter 4, welcher eine Förderrichtung 6 aufweist und welcher dazu eingerichtet ist, Stückgut in die Sortiervorrichtungen 2 zu schleusen. Der Sorter 4 kann der in FIG 1 genannte Sorter 4 sein. Außerdem kann der Sorter 4 z. B. ein Querbandsorter, ein Kippschalensorter oder ein Schiebeschuhsorter sein.

Der Kippmechanismus 16 der jeweiligen Sortiervorrichtung 2 ist derart eingerichtet, dass die Kippbewegung 18 der Kanalelemente 10, 12 der jeweiligen Sortiervorrichtung 2 zumindest im Wesentlichen im rechten Winkel zu der Förderrichtung 6 des Sorters 4 erfolgt. In diesem Beispiel erfolgt die Förderrichtung 6 zeichnungsgemäß nach hinten und die Kippbewegung 18 erfolgt in der Bildebene zeichnungsgemäß nach rechts und/oder links.

Einer besseren Übersichtlichkeit halber wurde darauf verzichtet, in FIG 7 sämtliche Bezugszeichen einzuzeichnen. Die Bezugszeichen einer jeweiligen Sortiervorrichtung 2 können jedoch in Analogie zu FIG 1 bis FIG 6 ergänzt werden.

Die Sortiervorrichtungen 2 sind in FIG 7 jeweils in ihrer Position erster Art gezeigt. Jede der Sortiervorrichtungen 2 kann auch die zuvor beschriebene erste Position zweiter Art und/oder die zweite Position zweiter Art einnehmen.

Jede der Sortiervorrichtungen 2 wird jeweils als Mehrfach-Endstelle der Sortieranlage 44 verwendet.

Auf diese Weise wird eine platzsparende Sortierung von Stückgut, insbesondere von Sendungen, ermöglicht.

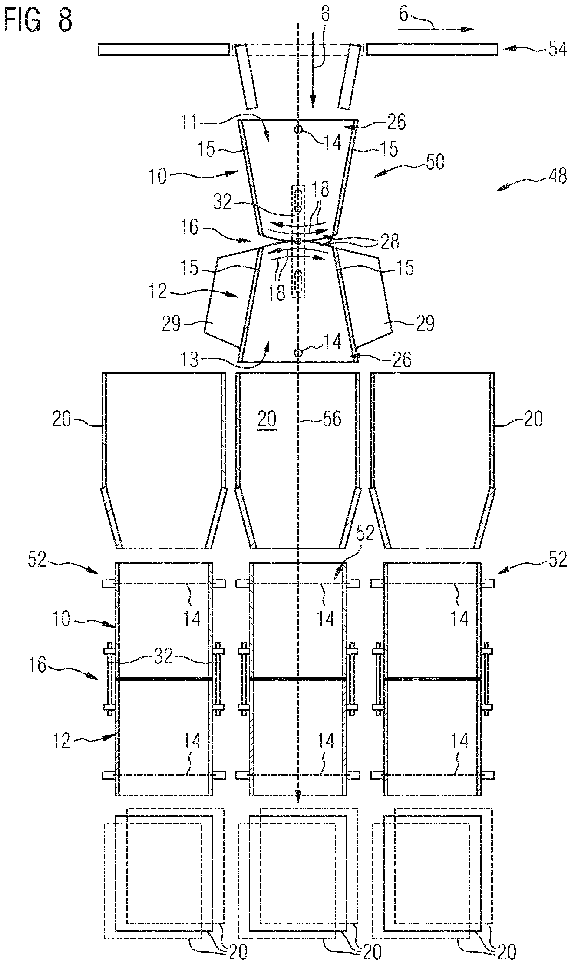

FIG 8 zeigt schematisch eine Kaskaden-Sortiervorrichtung 48 mit mehreren Sortiervorrichtungen 50, 52 in der Seitenansicht.

Ferner zeigt FIG 8 einen Sorter 54, welcher dazu eingerichtet ist, Stückgut in die Kaskaden-Sortiervorrichtung 48 zu schleusen. Die Kaskaden-Sortiervorrichtung 48 wird als Mehrfach-Endstelle für den Sorter 54 verwendet.

Die nachfolgende Beschreibung beschränkt sich im Wesentlichen auf die Unterschiede zum Ausführungsbeispiel aus FIG 1 bis 6, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

Die erste Sortiervorrichtung 50 der Kaskaden-Sortiervorrichtung 48 ist dazu eingerichtet, Stückgut in eine von mehreren Zielstellen 20 der ersten Sortiervorrichtung 50 zu sortieren.

An jede Zielstelle 20 einer ersten der Sortiervorrichtung 50 schließt sich jeweils eine weitere, gleichartige Sortiervorrichtung 52 an.

Das Stückgut gelangt also über eine der Zielstellen 20 der ersten Sortiervorrichtung 50 in eine der weiteren Sortiervorrichtungen 52 und wird dort nochmals - in analoger Weise - sortiert.

Da jede Sortiervorrichtung 50, 52 jeweils drei Zielstellen 20 aufweist, wird mittels der Kaskaden-Sortiervorrichtung 48 eine Neunfach-Sortierung erreicht. Auf diese Weise ist die Kaskaden-Sortiervorrichtung 48 besonders platzsparend.

Die weiteren Sortiervorrichtungen 52 sind in diesem Beispiel in FIG 8 um 90° gedreht zur ersten Sortiervorrichtung 50 angeordnet. Eine andere Anordnung ist jedoch auch möglich.

Die Zielstellen 20 der ersten Sortiervorrichtung 50 sind in diesem Beispiel nebeneinander angeordnet. Aufgrund der gedrehten Anordnung der weiteren Sortiervorrichtungen 52 sind die Zielstellen 20 der weiteren Sortiervorrichtungen 52 in diesem Beispiel hintereinander angeordnet. Zur Darstellung wurden die hintereinander angeordneten Zielstellen 20 leicht versetzt gezeichnet, wobei jeweils die vordere und die hintere Zielstelle 20 gestrichelt gezeichnet wurden.

Der Sorter 54 ist in diesem Beispiel als Fallklappensorter ausgebildet.

Das erste Kanalelement 10 der ersten Sortiervorrichtung 50 schließt sich direkt an den als Fallklappensorter ausgebildeten Sorter 54 an. Folglich wird in diesem Beispiel vor dem ersten Kanalelement 10 der ersten Sortiervorrichtung 50 kein Übergangsbereich 9 benötigt. Analog ist hier auch kein Übergangsbereich 9 vor dem ersten Kanalelement 10 der weiteren Sortiervorrichtungen 52 vorgesehen. Prinzipiell wären Übergangsbereiche 9 jedoch jeweils möglich.

In FIG 8 sind exemplarisch die Kanalelemente 10, 12 jede der Sortiervorrichtungen 50, 52 in ihrer Position erster Art positioniert.

Damit wird von der ersten Sortiervorrichtung 50 ein Stückgutweg 56 vorgegeben, welcher durch die beiden Kanalelemente 10, 12 dieser Sortiervorrichtung 50 hindurch in die mittlere Zielstelle 20 dieser ersten Sortiervorrichtung 50 führt. Von der mittleren Zielstelle 20 der ersten Sortiervorrichtung 50 führt der Stückgutweg 56 in die mittlere der weiteren Sortiervorrichtungen 52. Von der mittleren weiteren Sortiervorrichtung 52 wird weiter vorgegeben, dass der Stückgutweg 56 durch die beiden Kanalelemente 10, 12 dieser Sortiervorrichtung 52 hindurch in die mittlere Zielstelle 20 dieser mittleren weiteren Sortiervorrichtung 52 führt.

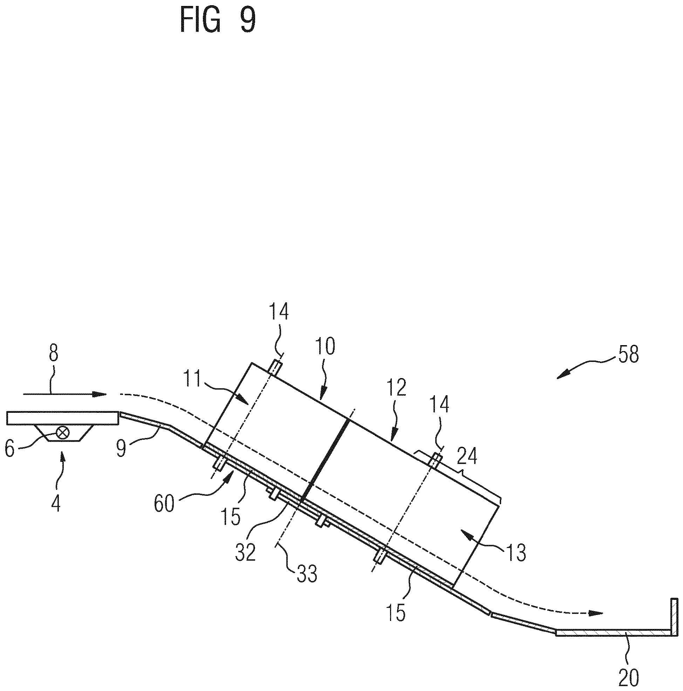

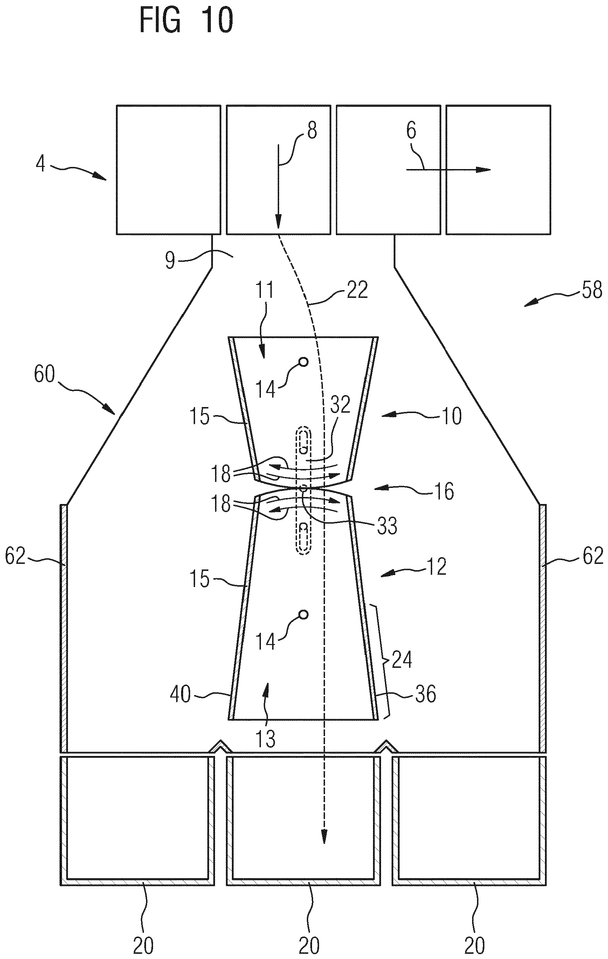

FIG 9 zeigt eine andere Sortiervorrichtung 58 für Stückgut mit zwei Kanalelementen 10, 12, welche auf einer schiefen Ebene 60 angeordnet sind, in einer Seitenansicht. FIG 10 zeigt die andere Sortiervorrichtung 58 aus FIG 9 in einer Draufsicht, wobei die Kanalelemente 10, 12 von oben gesehen werden.

Die nachfolgende Beschreibung beschränkt sich im Wesentlichen auf die Unterschiede zum Ausführungsbeispiel aus FIG 1 bis FIG 6, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

Die von den Kanalelementen 10, 12 ausgebildeten Kanäle 11, 13 verlaufen geneigt. Die Kanäle 11, 13 werden U-förmig von Wänden 15 des jeweiligen Kanalelements 10, 12 begrenzt.

Die Drehachse 14 des zweiten Kanalelements 12 ist an der vom ersten Kanalelement 10 weg gerichteten Hälfte 24, nicht jedoch an dem vom ersten Kanalelement 10 weg gerichteten Ende 26, des zweiten Kanalelements 12 angeordnet.

Der Motor 30 zum Antreiben der Kippbewegung 18 ist der Übersichtlichkeit halber nicht dargestellt.

In FIG 9 und FIG 10 ist die andere Sortiervorrichtung 58 in der Position erster Art positioniert.

Die andere Sortiervorrichtung 58 weist Begrenzungselemente 62 auf (anstatt der Begrenzungselemente 34), welche seitlich an der schiefen Ebene 60 angebracht sind.

Das Koppelmittel 32 ist in diesem Beispiel unterhalb der schiefen Ebene 60 angeordnet. Um eine Bewegung des Koppelelements 32 um seine Drehachse 33 - und damit eine Kippbewegung 18 der Kanalelemente 10, 12 - zu ermöglichen, können in der schiefen Ebene 60 Aussparungen vorgesehen sein.

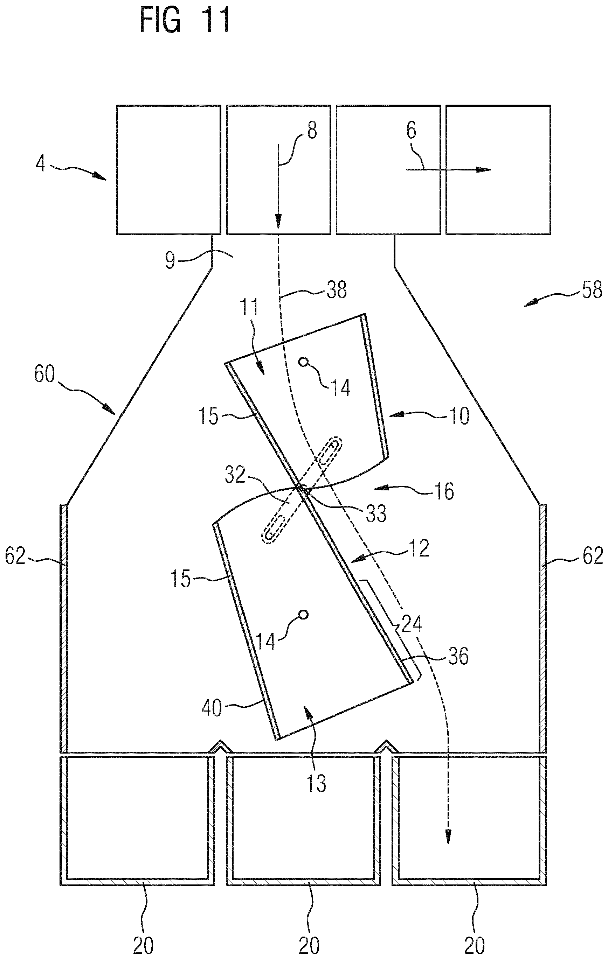

FIG 11 zeigt die andere Sortiervorrichtung 58 aus FIG 9 und FIG 10, wobei die Kanalelemente 10, 12 in einer ersten Position zweiter Art positioniert sind.

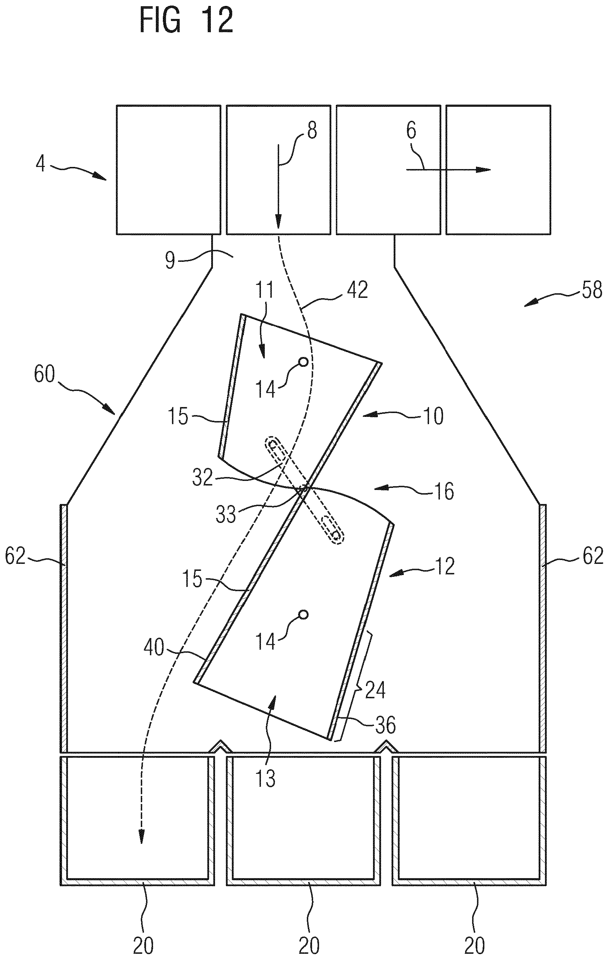

FIG 12 zeigt die andere Sortiervorrichtung 58 aus FIG 9 und FIG 10, wobei die Kanalelemente 10, 12 in einer zweiten Position zweiter Art positioniert sind.

Die Begrenzungselemente 62 begrenzen die Stückgutwege 38, 42 in den Positionen zweiter Art der Kanalelemente 10, 12.

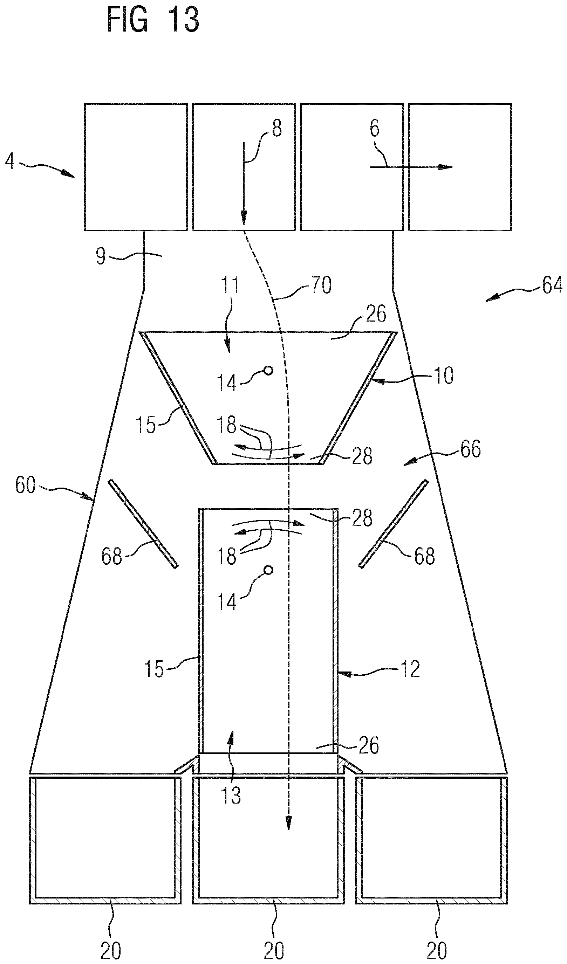

FIG 13 zeigt eine weitere Sortiervorrichtung 64 für Stückgut mit zwei Kanalelementen 10, 12, wobei die Kanalelemente 10, 12 in ihrer ersten Position positioniert sind. Auch die Kanalelemente 10, 12 der weiteren Sortiervorrichtung 64 sind auf einer schiefen Ebene 60 angeordnet.

Die nachfolgende Beschreibung beschränkt sich im Wesentlichen auf die Unterschiede zum Ausführungsbeispiel aus FIG 9 bis FIG 12, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

Die Drehachse 14 des zweiten Kanalelements 12 ist nicht an der vom ersten Kanalelement 10 weg gerichteten Hälfte 24 angeordnet, sondern an der zum ersten Kanalelement 10 hin gerichteten Hälfte des zweiten Kanalelements 12.

Die weitere Sortiervorrichtung 64 weist einen anderen Kippmechanismus 66 auf. Außerdem weist die weitere Sortiervorrichtung 64 Begrenzungselemente 68 auf.

Der andere Kippmechanismus 66 ist derart ausgebildet, dass die Kippbewegungen 18 der beiden Kanalelemente 10, 12 miteinander gekoppelt sind. Die Kopplung kann hier mittels zweier Synchronmotoren erfolgen (nicht dargestellt). Ein als Koppelstange ausgebildetes Koppelmittel, welches die Kanalelemente 10, 12 miteinander verbindet, ist hingegen nicht vorgesehen.

Die Kippbewegungen 18 der beiden Kanalelemente 10, 12 sind derart miteinander gekoppelt, dass die Kippbewegung 18 des ersten Kanalelements 10 in die entgegengesetzte Drehrichtung verläuft als die Kippbewegung 18 des zweiten Kanalelements 12.

Das heißt, wenn das erste Kanalelement 10 im Uhrzeigersinn verkippt wird, dann wird das zweite Kanalelement 12 gegen den Uhrzeigersinn verkippt - und umgekehrt.

Auf diese Weise führen beim Verkippen der Kanalelemente 10, 12 die zumindest im Wesentlichen zueinander gerichteten Enden 28 der Kanalelemente 10, 12 eine gleichläufige Bewegung aus.

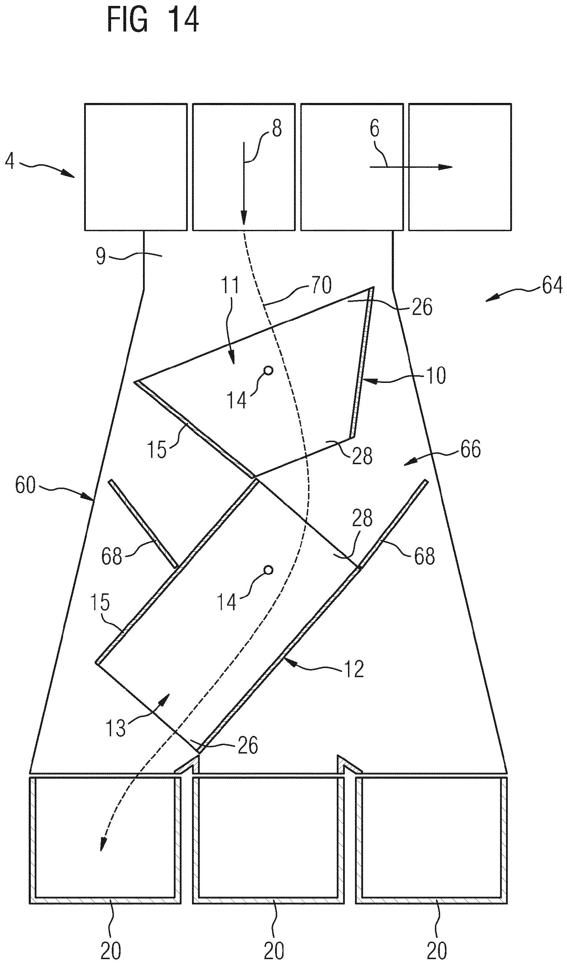

Das heißt, wenn das erste Kanalelement 10 zeichnungsgemäß gegen den Uhrzeigersinn verkippt wird und das zweite Kanalelement 12 zeichnungsgemäß im Uhrzeigersinn verkippt wird, dann bewegen sich die zumindest im Wesentlichen zueinander gerichteten Enden 28 der Kanalelemente 10, 12 zeichnungsgemäß nach rechts (vgl. FIG 14).

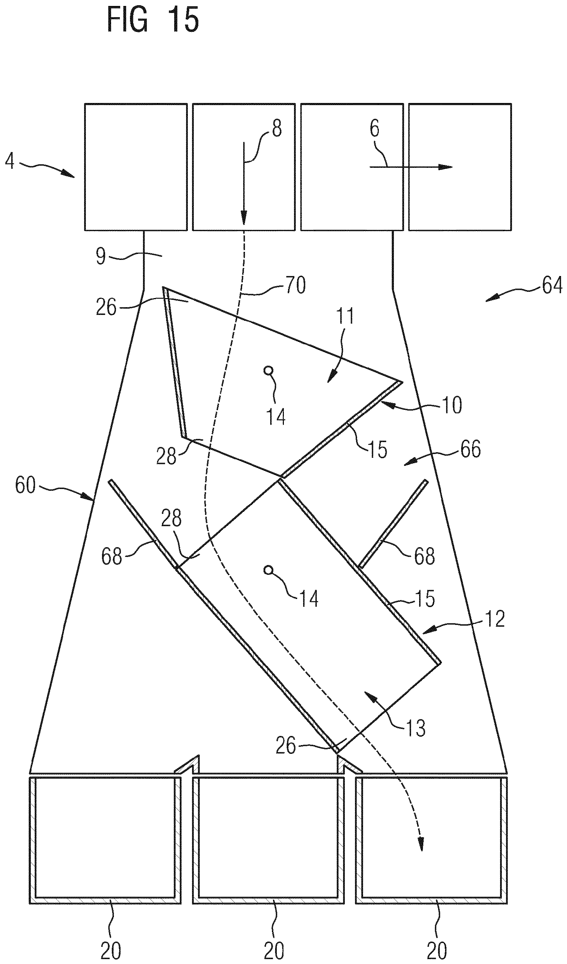

Das heißt weiter, wenn das erste Kanalelement 10 zeichnungsgemäß im Uhrzeigersinn verkippt wird und das zweite Kanalelement 12 zeichnungsgemäß gegen den Uhrzeigersinn verkippt wird, dann bewegen sich die zumindest im Wesentlichen zueinander gerichteten Enden 28 der Kanalelemente 10, 12 zeichnungsgemäß nach links (vgl. FIG 15).

Auf dieser Weise sind die Kanalelemente 10, 12 in mehreren Positionen erster Art positionierbar, jedoch nicht ein einer Position zweiter Art.

In FIG 13 sind die Kanalelemente in einer ersten Position dargestellt. FIG 14 zeigt die weitere Sortiervorrichtung 64 aus FIG 13, wobei die Kanalelemente 10, 12 in ihrer zweiten Position positioniert sind. FIG 15 zeigt die weitere Sortiervorrichtung 64 aus FIG 13, wobei die Kanalelemente 10, 12 in ihrer dritten Position positioniert sind.

Die Begrenzungselemente 68 begrenzen in diesem Beispiel die Kippbewegung des zweiten Kanalelements 12. Außerdem begrenzen die Begrenzungselemente 68 die Stückgutwege 70 in der zweiten und dritten Position der Kanalelemente 10, 12.

Abhängig von den Positionen der Kanalelemente 10, 12 (vgl. FIG 13 bis FIG 15) wird mittels der Kanalelemente 10, 12 ein jeweiliger Stückgutweg 70 zum Einsortieren von Stückgut vorgegeben. Jeder der Stückgutwege führt zu einer der Zielstellen 20.

Jeder der Stückgutwege 70 führt durch das erste Kanalelement 10 und durch das zweite Kanalelement 12 hindurch. Das heißt, in diesem Ausführungsbeispiel führt der Stückgutweg 70 sowohl in der ersten Position der Kanalelemente 10, 12 (vgl. FIG 13), als auch in der zweiten Position der Kanalelemente 10, 12 (vgl. FIG 14), als auch in der dritten Position der Kanalelemente 10, 12 (vgl. FIG 15) durch das erste Kanalelement 10 und durch das zweite Kanalelement 12 hindurch.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Sortiervorrichtung (2, 50, 52, 58, 64) für Stückgut mit mehreren Zielstellen (20), umfassend
- ein erstes Kanalelement (10) und ein zweites Kanalelement (12), welche jeweils auf einer Drehachse (14) gelagert sind, sowie
- einen Kippmechanismus (16, 66), welcher im aktivierten Zustand eine Kippbewegung (18) der beiden Kanalelemente (10, 12) um ihre jeweilige Drehachse (14) bewirkt,
wobei die Kanalelemente (10, 12) unter Verwendung des Kippmechanismus (16, 66) zwischen mehreren Positionen jeweils zum Einsortieren von Stückgut in eine der mehreren Zielstellen (20) beweglich sind;
**dadurch gekennzeichnet, dass**,
das erste Kanalelement (10) einen ersten Kanal (11) ausbildet, das zweite Kanalelement (12) einen zweiten Kanal (13) ausbildet und
eine Position erster Art der Kanalelemente (10, 12) derart ausgestaltet ist, dass der erste Kanal (11) des ersten Kanalelements (10) in den zweiten Kanal (13) des zweiten Kanalelements (12) mündet.

2. Sortiervorrichtung (2, 50, 52, 58, 64) nach Anspruch 1,
**dadurch gekennzeichnet, dass**
der Kippmechanismus (16, 66) im aktivierten Zustand eine gleichzeitige Kippbewegung (18) der beiden Kanalelemente (10, 12) bewirkt.

3. Sortiervorrichtung (64) nach Anspruch 1 oder 2,
**dadurch gekennzeichnet, dass**
der Kippmechanismus (66) derart ausgebildet ist,
dass die Kippbewegungen (18) der beiden Kanalelemente (10, 12) miteinander gekoppelt sind, wobei die Kippbewegung (18) des ersten Kanalelements (10) in die entgegengesetzte Drehrichtung verläuft als die Kippbewegung (18) des zweiten Kanalelements (12).

4. Sortiervorrichtung (2, 50, 52, 58) nach Anspruch 1 oder 2, **dadurch gekennzeichnet, dass**
der Kippmechanismus (16) derart ausgebildet ist,
dass die Kippbewegungen (18) der beiden Kanalelemente (10, 12) miteinander gekoppelt sind, wobei die Kippbewegung (18) des ersten Kanalelements (10) in die gleiche Drehrichtung verläuft wie die Kippbewegung (18) des zweiten Kanalelements (12) .

5. Sortiervorrichtung (2, 50, 52, 58, 64) nach einem der vorhergehenden Ansprüche,
**dadurch gekennzeichnet, dass**
abhängig von den Positionen der Kanalelemente (10, 12) mittels der Kanalelemente (10, 12) ein jeweiliger Stückgutweg (22, 38, 42, 56, 70) zum Einsortieren von Stückgut vorgegeben wird,
wobei, insbesondere unabhängig von der Position der Kanalelemente (10, 12), jeder der Stückgutwege (22, 38, 42, 56, 70) durch das erste Kanalelement (10) hindurch führt.

6. Sortiervorrichtung (2, 50, 52, 58, 64) nach einem der vorhergehenden Ansprüche,
**dadurch gekennzeichnet, dass**
abhängig von den Positionen der Kanalelemente (10, 12) mittels der Kanalelemente (10, 12) ein jeweiliger Stückgutweg (22, 38, 42, 56, 70) zum Einsortieren von Stückgut in eine der Zielstellen (20) vorgegeben wird,
wobei eine Position erster Art der Kanalelemente (10, 12) derart ausgestaltet ist,
dass der Stückgutweg (22, 56, 70) durch das zweite Kanalelement (12) hindurch führt.

7. Sortiervorrichtung (2, 50, 52, 58) nach einem der vorhergehenden Ansprüche,
**dadurch gekennzeichnet, dass**
abhängig von den Positionen der Kanalelemente (10, 12) mittels der Kanalelemente (10, 12) ein jeweiliger Stückgutweg (22, 38, 42, 56) zum Einsortieren von Stückgut in eine der Zielstellen (20) vorgegeben wird,
wobei eine Position zweiter Art der Kanalelemente (10, 12) derart ausgestaltet ist, dass der Stückgutweg (38, 42) entlang einer Außenseite (36, 40) des zweiten Kanalelements (12) führt.

8. Sortiervorrichtung (2, 50, 52, 58) nach Anspruch 7, **gekennzeichnet durch**
zwei solcher Positionen zweiter Art, wobei der Stückgutweg (38) in der ersten Position zweiter Art entlang einer ersten Außenseite (36) des zweiten Kanalelements (12) führt und der Stückgutweg (42) in der zweiten Position zweiter Art entlang einer der ersten Außenseite (36) entgegengesetzten zweiten Außenseite (40) des zweiten Kanalelements (12) führt.

9. Sortiervorrichtung (2, 50, 52, 58) nach einem der vorhergehenden Ansprüche,
**dadurch gekennzeichnet, dass**
eine Position zweiter Art der Kanalelemente (10, 12) derart ausgestaltet ist, dass
eine Außenseite (36, 40) des zweiten Kanalelements (12) im Wesentlichen in Verlängerung zu einer Innenseite (37) des ersten Kanalelements (10) platziert ist.

10. Sortiervorrichtung (2, 50, 52, 58, 64) nach einem der vorhergehenden Ansprüche,
**dadurch gekennzeichnet, dass**
die mehreren Zielstellen (20) mindestens drei Zielstellen (20) umfassen, insbesondere genau drei Zielstellen (20).

11. Sortiervorrichtung (2, 50, 52, 58, 64) nach einem der vorhergehenden Ansprüche,
**dadurch gekennzeichnet, dass**
das erste Kanalelement (10) ein oberes Kanalelement und
das zweite Kanalelement (12) ein unteres Kanalelement ist, wobei die beiden Kanalelemente (10, 12) oberhalb der Zielstellen (20) angeordnet sind.

12. Kaskaden-Sortiervorrichtung (48) mit mehreren Sortiervorrichtungen (50, 52) jeweils nach einem der vorher genannten Ansprüche,
wobei sich an jede Zielstelle (20) einer ersten der Sortiervorrichtungen (50) jeweils eine andere der mehreren Sortiervorrichtungen (52) anschließt.

13. Verwendung der Sortiervorrichtung (2, 50, 52, 58, 64) nach einem der Ansprüche 1 bis 11 und/oder der Kaskaden-Sortiervorrichtung (48) nach Anspruch 12 als Mehrfach-Endstelle einer Sortieranlage (44).

14. Sortieranlage (44) mit mehreren Sortiervorrichtungen (2) nach einem der Ansprüche 1 bis 11 und/oder mehreren der Kaskaden-Sortiervorrichtungen (48) nach Anspruch 12, wobei die Sortiervorrichtungen (2) und/oder die Kaskaden-Sortiervorrichtungen (48) zumindest in einer Reihe (46) angeordnet sind, insbesondere in zwei Reihen (46),
und mit einem Sorter (4, 54), welcher dazu eingerichtet ist, Stückgut in die Sortiervorrichtungen (2) und/oder die Kaskaden-Sortiervorrichtungen (48) zu schleusen.

## Claims

1. Sorting facility (2, 50, 52, 58, 64) for piece goods with a number of destination points (20),
comprising
- a first channel element (10) and a second channel element (12), which are each supported on an axis of rotation (14), and also
- a tilt mechanism (16, 66), which in its activated state brings about a tilting movement (18) of the two channel elements (10, 12) about their respective axis of rotation (14),
wherein the channel elements (10, 12) are able to be moved using the tilt mechanism (16, 66) between a number of positions in each case for sorting piece goods into one of the number of destination points (20);
**characterised in that**
the first channel element (10) forms a first channel (11), the second channel element (12) forms a second channel (13) and
a first type of position of the channel elements (10, 12) is embodied in such a way that the first channel (11) of the first channel element (10) opens out into the second channel (13) of the second channel element (12).

2. Sorting facility (2, 50, 52, 58, 64) according to claim 1,
**characterised in that**,
in its activated state, the tilt mechanism (16, 66) brings about a simultaneous tilting movement (18) of the two channel elements (10, 12).

3. Sorting facility (64) according to claim 1 or 2,
**characterised in that**
the tilt mechanism (66) is embodied in such a way that the tilting movements (18) of the two channel elements (10, 12) are coupled to one another, wherein the tilting movement (18) of the first channel element (10) runs in the opposite direction of rotation to the tilting movement (18) of the second channel element (12).

4. Sorting facility (2, 50, 52, 58) according to claim 1 or 2,
**characterised in that**
the tilt mechanism (16) is embodied in such a way that
the tilting movements (18) of the two channel elements (10, 12) are coupled to one another, wherein the tilting movement (18) of the first channel element (10) runs in the same direction of rotation as the tilting movement (18) of the second channel element (12).

5. Sorting facility (2, 50, 52, 58, 64) according to one of the preceding claims,
**characterised in that**,
depending on the positions of the channel elements (10, 12), a respective piece goods path (22, 38, 42, 56, 70) for sorting of piece goods is predetermined by means of the channel elements (10, 12),
wherein, in particular regardless of the position of the channel elements (10, 12), each of the piece goods paths (22, 38, 42, 56, 70) runs through the first channel element (10).

6. Sorting facility (2, 50, 52, 58, 64) according to one of the preceding claims,
**characterised in that**,
depending on the positions of the channel elements (10, 12), a respective piece goods path (22, 38, 42, 56, 70) for sorting piece goods into one of the destination points (20) is predetermined by means of the channel elements (10, 12),
wherein a first type of position of the channel elements (10, 12) is embodied in such a way that
the piece goods path (22, 56, 70) leads through the second channel element (12).

7. Sorting facility (2, 50, 52, 58) according to one of the preceding claims,
**characterised in that**,
depending on the positions of the channel elements (10, 12), a respective piece goods path (22, 38, 42, 56, 70) for sorting piece goods into one of the destination points (20) is predetermined by means of the channel elements (10, 12),
wherein a second type of position of the channel elements (10, 12) is embodied in such a way that the piece goods path (38, 42) runs along an outer side (36, 40) of the second channel element (12) .

8. Sorting facility (2, 50, 52, 58) according to claim 7,
**characterised by**
two such second types of position, wherein the piece goods path (38) runs along a first outer side (36) of the second channel element (12) in the first second type of position and the piece goods path (42) runs along a second outer side (40) opposite the first outer side (36) of the second channel element (12) in the second second type of position.

9. Sorting facility (2, 50, 52, 58) according to one of the preceding claims,
**characterised in that**
a second type of position of the channel elements (10, 12) is embodied in such a way that
an outer side (36, 40) of the second channel element (12) is essentially placed as an extension to an inner side (37) of the first channel element (10).

10. Sorting facility (2, 50, 52, 58, 64) according to one of the preceding claims,
**characterised in that**
the number of destination points (20) comprises at least three destination points (20), in particular at least three destination points (20).

11. Sorting facility (2, 50, 52, 58, 64) according to one of the preceding claims,
**characterised in that**
the first channel element (10) is an upper channel element and the second channel element (12) is a lower channel element, wherein the two channel elements (10, 12) are arranged above the destination points (20).

12. Cascade sorting facility (48) with a number of sorting facilities (50, 52) each according to one of the above claims, wherein at each destination point (20) a first of the sorting facilities (50) is adjoined in each case by another of the number of sorting facilities (52).

13. Use of the sorting facility (2, 50, 52, 58, 64) according to one of claims 1 to 11 and/or of the cascade sorting facility (48) according to claim 12 as multiple end station of a sorting system (44) .

14. Sorting system (44) with a number of sorting facilities (2) according to one of claims 1 to 11 and/or with a number of the cascade sorting facilities (48) according to claim 12, wherein the sorting facilities (2) and/or the cascade sorting facilities (48) are arranged in at least one row (46), in particular in two rows (46),
and with a sorter (4, 54), which is configured to discharge piece goods into the sorting facilities (2) and/or the cascade sorting facilities (48).

## Revendications

1. Dispositif de tri (2, 50, 52, 58, 64) pour marchandise de détail avec plusieurs postes cibles (20), comprenant
- un premier élément formant canal (10) et un second élément formant canal (12), qui sont montés respectivement sur un axe de rotation (14), ainsi
- qu'un mécanisme de basculement (16, 66) qui provoque à l'état activé un mouvement de basculement (18) des deux éléments formant canaux (10, 12) autour de leur axe de rotation (14) respectif,
dans lequel les éléments formant canaux (10, 12) sont mobiles en utilisant le mécanisme de basculement (16, 66) entre plusieurs positions respectivement pour le tri de marchandise de détail dans un des plusieurs postes cibles (20) ;
**caractérisé en ce que**
le premier élément formant canal (10) forme un premier canal (11), le second élément formant canal (12) forme un second canal (13) et
une position d'un premier type des éléments formant canaux (10, 12) est configurée de telle sorte que le premier canal (11) du premier élément formant canal (10) débouche dans le second canal (13) du second élément formant canal (12).

2. Dispositif de tri (2, 50, 52, 58, 64) selon la revendication 1, **caractérisé en ce que** le mécanisme de basculement (16, 66) provoque à l'état activé un mouvement de basculement (18) simultané des deux éléments formant canaux (10, 12).

3. Dispositif de tri (64) selon la revendication 1 ou 2, **caractérisé en ce que** le mécanisme de basculement (66) est formé de telle sorte que les mouvements de basculement (18) des deux éléments formant canaux (10, 12) sont couplés l'un à l'autre, dans lequel le mouvement de basculement (18) du premier élément formant canal (10) se déroule dans la direction de rotation opposée au mouvement de basculement (18) du second élément formant canal (12).

4. Dispositif de tri (2, 50, 52, 58) selon la revendication 1 ou 2, **caractérisé en ce que** le mécanisme de basculement (16) est formé de telle sorte que les mouvements de basculement (18) des deux éléments formant canaux (10, 12) sont couplés l'un à l'autre, dans lequel le mouvement de basculement (18) du premier élément formant canal (10) se déroule dans la même direction de rotation que le mouvement de basculement (18) du second élément formant canal (12).

5. Dispositif de tri (2, 50, 52, 58, 64) selon l'une quelconque des revendications précédentes, **caractérisé en ce qu'**en fonction des positions des éléments formant canaux (10, 12) une trajectoire de marchandise de détail (22, 38, 42, 56, 70) respective est prédéterminée au moyen des éléments formant canaux (10, 12) pour le tri de marchandise de détail, dans lequel, en particulier indépendamment de la position des éléments formant canaux (10, 12), chacune des trajectoires de marchandise de détail (22, 38, 42, 56, 70) passe à travers le premier élément formant canal (10).

6. Dispositif de tri (2, 50, 52, 58, 64) selon l'une quelconque des revendications précédentes, **caractérisé en ce qu'**en fonction des positions des éléments formant canaux (10, 12) une course de marchandise de détail (22, 38, 42, 56, 70) respective est prédéterminée au moyen des éléments formant canaux (10, 12) pour le tri de marchandise de détail dans un des postes cibles, dans lequel une position d'un premier type des éléments formant canaux (10, 12) est configurée de telle sorte que la course de marchandise de détail (22, 56, 70) passe à travers le second élément de canal (12).

7. Dispositif de tri (2, 50, 52, 58) selon l'une quelconque des revendications précédentes, **caractérisé en ce qu'**en fonction des positions des éléments formant canaux (10, 12) une course de marchandise de détail (22, 38, 42, 56) respective est déterminée au moyen des éléments formant canaux (10,12) pour le tri de marchandise de détail dans un des postes cibles (20), dans lequel une position d'un second type des éléments formant canaux (10, 12) est configurée de telle sorte que la course de marchandise de détail (38, 42) conduit le long d'un côté externe (36, 40) du second élément formant canal (12).

8. Dispositif de tri (2, 50, 52, 58) selon la revendication 7, **caractérisé par** deux telles positions d'un second type, dans lequel la course de marchandise de détail (38) dans la première position d'un second type conduit le long d'un premier côté externe (36) du second élément formant canal (12) et la course de marchandise de détail (42) dans la seconde position d'un second type conduit le long d'un second côté externe (40) du second élément formant canal (12) et opposé au premier côté externe (36).

9. Dispositif de tri (2, 50, 52, 58) selon l'une quelconque des revendications précédentes, **caractérisé en ce qu'**une position d'un second type des éléments formant canaux (10, 12) est configurée de telle sorte qu'un côté externe (36, 40) du second élément formant canal (12) est placé sensiblement dans le prolongement par rapport à un côté interne (37) du premier élément formant canal (10).

10. Dispositif de tri (2, 50, 52, 58, 64) selon l'une quelconque des revendications précédentes, **caractérisé en ce que** les plusieurs postes cibles (20) comprennent au moins trois postes cibles (20), en particulier exactement trois postes cibles (20).

11. Dispositif de tri (2, 50, 52, 58, 64) selon l'une quelconque des revendications précédentes, **caractérisé en ce que** le premier élément formant canal (10) est un élément formant canal supérieur et le second élément formant canal (12) est un élément formant canal inférieur, dans lequel les deux éléments formant canaux (10, 12) sont disposés au-dessus des postes cibles (20).

12. Dispositif de tri en cascade (48) avec plusieurs dispositifs de tri (50, 52) respectivement selon l'une quelconque des revendications précitées, dans lequel à chaque poste cible (20) d'un premier des dispositifs de tri (50) se raccorde respectivement un autre des plusieurs dispositifs de tri (52).

13. Utilisation du dispositif de tri (2, 50, 52, 58, 64) selon l'une quelconque des revendications 1 à 11 et/ou du dispositif de tri en cascade (48) selon la revendication 12 en tant que poste final multiple d'une installation de tri (44).

14. Installation de tri (44) avec plusieurs dispositifs de tri (2) selon l'une quelconque des revendications 1 à 11 et/ou plusieurs des dispositifs de tri en cascade (48) selon la revendication 12, dans lequel les dispositifs de tri (2) et/ou les dispositifs de tri en cascade (48) sont disposés au moins sur un rang (46), en particulier sur deux rangs (46), et avec un trieur (4, 54) qui est configuré pour faire passer une marchandise de détail dans les dispositifs de tri (2) et/ou les dispositifs de tri en cascade (48).
